# EUROPÄISCHE PATENTSCHRIFT

(11) **EP 1 101 957 B1**
(45) Veröffentlichungstag und Bekanntmachung des Hinweises auf die Patenterteilung: **06.05.2009**
(21) Anmeldenummer: 00124503.4
(22) Anmeldetag: 09.11.2000
(51) Int. Cl.: F16B 19/10, F16B 37/06

(54) **Montagescheibe für Fahrzeugteile**
Assembly washer for a vehicle component
Rondelle de montage pour un élément de véhicule

(30) Priorität: 18.11.1999 DE 19955416
(43) Veröffentlichungstag der Anmeldung: 23.05.2001
(73) Patentinhaber: Carcoustics (Liechtenstein) AG, 9493 Mauren (LI)
(72) Erfinder: Profunser, Herbert, 6832 Zwischenwasser (AT)
(74) Vertreter: Cohausz & Florack

(56) Entgegenhaltungen:
- WO-A-99/06718
- DE-A- 1 475 148
- DE-A- 19 916 809
- GB-A- 205 106
- GB-A- 2 069 088
- GB-A- 2 307 508
- US-A- 2 355 439
- US-A- 4 890 966

## Beschreibung

Die Erfindung betrifft eine Montageanordnung zum Befestigen eines Trägerblechs an einem Befestigungsdorn eines Befestigungsteils, wobei die Montageanordnung eine Haltescheibe und eine Federscheibe sowie eine Montagescheibe oder das Trägerblech beinhaltet, gemäß dem Oberbegriff des Anspruchs 1, 14 oder 15.

Aus der EP 0 797 013 A1 ist eine Montagescheibe mit Federwirkung bekannt, die der Befestigung eines Befestigungsteils, insbesondere eines Bleches, an einem an einer Körperoberfläche, beispielsweise einer Karosserie befestigten Montagedorn (Befestigungsdorn) dient.

Nachteil der bekannten Montagescheibe ist, daß sie nur seitlich auf ein Trägerblech aufgeschoben werden kann, was bedeutet, daß sie nur am Rand eines Trägerbleches verwendet werden kann.

Es sind ferner Montagescheiben mit Federwirkung bekannt geworden, die auch in beträchtlicher Entfernung von einem Rand eines Trägerbleches in entsprechenden Ausnehmungen des Trägerbleches befestigt werden können. Nachteil dieser bekannten Montagescheiben ist jedoch, daß das Trägerblech mehrfach bearbeitet werden muß, um die Montagescheibe dort an der Ausnehmung zu verankern.

Ein erster Bearbeitungsvorgang besteht darin, daß aus dem Trägerblech Krallen herausgestanzt werden, welche Krallen nach oben ragen und welche die eine Seite der Montagescheibe, nämlich die Federscheibe, aufnehmen.

Die mittlere zentrale Ausnehmung im Trägerblech muß mit einem Bördelkragen versehen werden, der axial über das Trägerblech hervorsteht. Auf diesem Bördelkragen wird die zentrale Ausnehmung einer Montagescheibe aufgesetzt und die Montagescheibe wird dann mit diesem Bördelkragen verbördelt, so daß die an der gegenüberliegenden Seite des Trägerbleches mit diesem Bördelkragen befestigt wird.

Diese bekannte Befestigung hat also den Nachteil, daß aus dem Trägerblech Krallen herausgestanzt werden müssen, was den Querschnitt des Trägerbleches im Bereich dieser Krallen stark schwächt und dadurch eine Bruchstelle im Trägerblech gebildet werden kann.

Nachdem die Krallen aus dem Trägerblech herausgestanzt werden, bilden sich dort Stanzausnehmungen, welche die Integrität des Trägerbleches verletzen, so daß dieses unerwünschte Ausnehmungen erhält. Das Trägerblech ist an dieser Stelle also nicht mehr dicht. Eine derartige Befestigung kann insbesondere deshalb nicht bei Wärmeabschirmaufgaben eingesetzt werden, weil durch die entstehenden Ausnehmungen Wärmestrahlung hindurchgeht und die Wärmeabschirmwirkung wesentlich verringert.

Weiterer Nachteil ist, daß das Trägerblech beidseitig bearbeitet werden muß, das heißt der Bördelrand muß unter Einsatz entsprechend komplizierter Werkzeuge angebracht werden, was mit hohem Arbeitsaufwand verbunden ist. Es ist also nicht möglich, eine derartige Montagescheibe lediglich von einer Seite her an dem Trägerblech zu befestigen, was bei vielen Befestigungsaufgaben aber wünschenswert ist.

Wird beispielsweise auch ein derartiges Trägerblech mit den aufgestellten Krallen und der daran befestigten Federscheibe transportiert, dann besteht die Gefahr, daß Teile sich ineinander verhaken, daß die Krallen unerwünscht aufgebogen werden, und die darin befestigten Federscheiben verloren gehen.

Die bekannte Montagescheibe besteht also im wesentlichen aus einer Montagescheibe, die von der einen Seite an das Blech angelegt wird und aus einer dem Trägerblech gegenüberliegenden Federscheibe, welche mit den vorher beschriebenen, aus dem Trägerblech herausgestanzten Krallen am Trägerblech befestigt ist.

Die WO 99/06718 A offenbart eine Vorrichtung zur Verriegelung einer Kraftfahrzeugtür. Die bekannte Vorrichtung umfasst ein erstes Element, das dorn- oder zapfenförmig ausgebildet ist und an einem Karosserieelement des Kraftfahrzeuges befestigt ist, sowie ein zweites Element in Form eines zylindrischen Gehäuses, das in eine Ausnehmung der Kraftfahrzeugtür formschlüssig eingeknüpft ist und mit dem ersten Element zusammenwirkt, um die Kraftfahrzeugtür in einer Schließstellung zu verriegeln. Das Gehäuse hat einen Flansch als Auflagefläche an der Kraftfahrzeugtür. An der Mantelfläche des Gehäuses sind im Abstand zu dem Flansch Rastnasen angeformt, die die Kraftfahrzeugtür an deren Ausnehmung hintergreifen. An dem Flansch ist ein zylindrischer Kragen angeformt, der mit einem Außengewinde versehen ist. Der Kragen trägt einen Zwischenflansch, der einen zylindrischen Randabschnitt mit einem Innengewinde aufweist, das mit dem Außengewinde des Gehäusekragens verschraubt ist. Der Zwischenflansch und der Flansch des Gehäuses definieren einen Ringraum, in welchem eine Federscheibe gehalten ist, die eine Ausnehmung zur Aufnahme des dorn- oder zapfenförmigen Elements besitzt. An der Ausnehmung der Federscheibe sind radial angeordnete Federschenkel ausgebildet, die ein Herausziehen des dorn- oder zapfenförmigen Elements aus dem an der Kraftfahrzeugtür verrasteten Gehäuse verhindern.

Die DE 1 475 148 A offenbart eine wasserdichte Befestigung von Federmuttern durch verformbare Zwischenstücke. Das verformbare Zwischenstück besteht dabei aus einer Platte, die einen umgebördelten Rand und eine zentrisch angeordnete Bohrung für einen Befestigungsbolzen aufweist. Nahe dem unteren Ende des umgebördelten Randes ist eine innenliegende, umlaufende Sicherungsnase ausgebildet, die eine Federmutter gegen Herausfallen sichert.

Der vorliegenden Erfindung liegt die Aufgabe zugrunde, eine Montageanordnung der eingangs genannten Art so weiterzubilden, dass das Trägerblech, insbesondere ein Wärmeabschirmblech selbst unverletzt bleibt, dass eine sichere und dauerhafte Befestigung einer Montagescheibe und/oder einer Haltescheibe für eine Federscheibe am Trägerblech gegeben ist, und dass die Montagescheibe und/oder Haltescheibe lediglich von einer Seite her am Trägerblech befestigt werden kann.

Gelöst wird diese Aufgabe durch eine Montageanordnung mit den Merkmalen des Anspruchs 1, 14 oder 15.

Vorteilhafte und bevorzugte Ausgestaltungen der erfindungsgemäßen Montageanordnung sind in den Unteransprüchen angegeben.

Die erfindungsgemäße Montageanordnung wird insbesondere für die Montage von Wärmeabschirmblechen (WASB) an der Fahrzeugunterseite von Fahrzeugen verwendet.

Die WASB werden an der Fahrzeugunterseite zwischen Abgasanlage und Rohbau oder anderen Fahrzeugteilen befestigt. Die Anbindungselemente sind am WASB unverlierbar vormontiert. Die Federelemente sind scheibenförmig mit einem Kegelansatz, der an der Spitze sternförmig durchgeschnitten ist. Durch das Aufschieben des WASB greifen Grobgewindebolzen durch die sternförmigen Ausstanzungen des Federelementes und verkrallen sich. Die Federelemente drücken das WASB unter Vorspannung gegen die Auflagen.

Um Kontaktkorrosion zwischen dem Alu-WASB und dem Stahlunterboden des Fahrzeuges zu verhindern, ist gegenüber der Federscheibe eine 2 mm dicke Montagescheibe als Opferelektrode am WASB angebracht. Die Federscheibe hat ein korrosionsfeste Beschichtung. (Dacromet-Beschichtung)

Die Federscheibe und die Montagescheibe haben einen großen Durchmesser und stützen das aus AL 99,5 W gefertigte WASB großflächig ab.

Die Federscheibe wird mit großem radialen und axialem Spiel in einer Haltescheibe formschlüssig gehalten. Es sind dadurch große Lage-Toleranzen des Gewindebolzens bzw. der WASB-Montagebohrungen möglich. Die Federscheibe wird in der rundum geschlossenen Haltescheibe durch Umbiegen von 3 Biegelaschen unverlierbar montiert, sie kann ohne Verhaken leicht verdreht werden.

Für die Befestigung des Federelementes (bestehend aus Halte- und Federscheibe) mit der Montagescheibe ist nur eine Bohrung mit etwa 10 mm Durchmesser im WASB notwendig. Das WASB wird durch Krallenausschnitte nicht geschwächt. Befestigungsstellen am Rand des WASB sind wesentlich weniger bruchgefährdet. Es ergibt sich eine Verbesserung der Dauerstandfestigkeit bei dynamischen Schwingungen und Erschütterungen. Es können dünnere Al-Bleche, z.B. 0,5 mm, verwendet werden.

Durch Krallenausschnitte entstehen Öffnungen im WASB, die die Wärmebestrahlung ungenügend abschirmen. Daraus resultiert eine Gefährdung von Fahrzeugteilen durch direkte Wärmebestrahlung.

Der Bördelkragen für die Befestigung der Montagescheibe ragt nicht durch, sondern ist an der Montagescheibe angebracht und ragt vom Fahrzeugboden weg. Eine direkte Gefährdung des WASB durch Kontaktkorrosion wird vermieden, denn das WASB ist durch die Montagescheibe abgedeckt. Die Federscheibe liegt nicht direkt auf dem WASB, die Haltescheibe verhindert einen direkten Kontakt zwischen Federscheibe und WASB und vermindert eine Korrosion.

Die Montage des WASB wird durch eine große abgerundete Bohrung der Montagescheibe erleichtert. Ein Verhaken der Gewindebolzen am Bördelkragen wird verhindert.

Der steife Bördelrand der Haltescheibe macht ein ungewolltes Öffnen unmöglich, verhindert ein Verlieren der dort mit Spiel gehaltenen Federscheibe und verhindert Montagefehlzeiten für die Nachbestückung von fehlenden Federscheiben.

Wegen des einfachen Aufbaus der Federscheibe ist eine automatische Zuführung der Federscheibe und Montagescheibe zum Montagegerät möglich.

Wesentliches Merkmal einer erfindungsgemäßen Ausführungsform ist, daß auf der einen Seite des Trägerbleches die Montagescheibe aufgelegt wird, die einen axial vorstehenden Kragen aufweist, der entsprechende Bördelansätze aufweist, wobei der Kragen durch die Ausnehmung im Trägerblech greift, so daß mit der Verbördelung des Kragens der Montagescheibe, die Montagescheibe mit dem Trägerblech verbunden wird.

In einer anderen Ausführungsform der Erfindung ist es vorgesehen, daß zwischen den umgebördelten Ansätzen des Kragens der Montagescheibe und dem Trägerblech, auf der Seite des Trägerblechs wo der Flansch der Montagescheibe aufliegt, eine Haltescheibe mit daran befestigter Federscheibe angebracht ist.

Hierbei ist es nicht lösungsnotwendig, daß eine Haltescheibe vorhanden ist, welche ihrerseits die Federscheibe aufnimmt. Die Haltescheibe kann auch vollständig entfallen und die Federscheibe kann als werkstoffeinstückiges Teil mit Laschen einwärts gebogen sein und die Funktion der Haltescheibe übernehmen.

Es kann also in einer Weiterbildung der Erfindung vorgesehen sein, daß lediglich auf der einen Seite des Trägerbleches eine Montagescheibe mit dem erwähnten axial vorstehenden und in die Ausnehmung des Trägerbleches hineingreifenden Kragen vorgesehen ist, während auf der gegenüberliegenden Seite eine Federscheibe mit einer mittleren, zentralen Ausnehmung vorhanden ist, die etwa mit der Ausnehmung in dem Trägerblech fluchtet und in welcher Ausnehmung der Kragen der oben liegenden Montagescheibe eingreift und deshalb mit dieser Federscheibe durch einen Verbördelunssvorgang verbindbar ist.

Bei der Ausbildung des Kragens der Montagescheibe ist es im übrigen gleichgültig, ob der Kragen ringsum umlaufend ist und hierbei der Kragen insgesamt mit durchgehenden Ansätzen ausgebildet ist, welche zur Verbördelung mit der darunter liegenden Haltescheibe geeignet sind.

In einer Ausführungsform kann der Kragen radiale Schlitze aufweisen, so daß einzelne Ansätze voneinander durch Schlitze getrennt am Umfang des Kragens angeordnet sind, die ebenfalls verbördelt werden können.

Der Einfachheit halber wird in der folgenden Beschreibung davon ausgegangen, daß eine Haltescheibe vorhanden ist, obwohl dies nicht lösungsnotwendig ist und der weiteren Einfachheit halber wird davon ausgegangen, daß der Kragen umlaufend ist und das die Ansätze also ringsumlaufend miteinander verbunden sind und nicht mit Schlitzen voneinander getrennt sind. Diese weitere Beschreibung dient nur zur Beschreibung von Ausführungsbeispielen und schränkt nicht den Lösungsgedanken der Erfindung ein.

Mit der technischen Lehre gemäß Anspruch 1 ergibt sich nun der wesentliche Vorteil, daß das Trägerblech selbst völlig unbearbeitet bleibt, daß heißt es reicht aus, eine beliebig geformte Ausnehmung im Trägerblech anzuordnen und diesseits und jenseits dieser Ausnehmung die Montagescheibe bzw. die Haltescheibe anzubringen.

Lediglich von einer Seite her muß dann mit einem Nietdorn in die Montagescheibe eingefahren werden, um die in der Ausnehmung der Montagescheibe angeordneten Ansätze radial nach außen zu verdrängen, um so über dem Ausnehmungsrand im Trägerblech hinaus unter die Haltescheibe zu greifen und damit die Haltescheibe an der Rückseite des Trägerbleches über diesen gebördelten Ansatz zu befestigen.

Selbstverständlich ist hierbei vorgesehen, daß die Haltescheibe beziehungsweise die mit der Haltescheibe verbundene Federscheibe auf einer Auflage ruht, um die von dem Nietdorn nach unten ausgerichtete Kraft auch aufzunehmen und in die Umformkraft umzusetzen.

Die Ausführungsform, bei der die Montagescheibe vorhanden ist, die mit einem entsprechenden Bördelrand mit der Ausnehmung im Trägerblech verbunden wird; dient zur, Befestigung eines Aluminiumteils, insbesondere eines Hitzeabschirmbleches an einem Karosserieteil, welches in der Regel aus einem Eisenblech besteht. Weil zwischen diesen beiden Materialien (Aluminium und Eisen) starke Spannungskorrosionen entstehen ist die aus relativ dicken Aluminiummaterial bestehende Montagescheibe vorgesehen, welche sich während der Lebensdauer des Kraftfahrzeuges auf Gruna der Spannungskorrosion zersetzt und hierbei sichergestellt ist, daß das ebenfalls aus Aluminium bestehende Trägerblech selbst nicht zersetzt wird. Die Montagescheibe wirkt hier als Opferelektrode.

Bei der Ausführungsform gemäß Anspruch 1 ist es günstig, wenn in der Montagescheibe radial einwärts von dem axial nach unten gerichteten Kragen eine Ringausnehmung vorhanden ist, welche einen entsprechenden biegungserleichternden Querschnitt des Kragens gewährleistet und welche Ringausnehmung im übrigen eine Verformung des Kragens so bewirkt, daß das Abschirmblech in die Vertiefung hineingezogen wird und damit bündig an seiner der Montagescheibe gegenüberliegenden Oberfläche bleibt.

In einer anderen Ausgestaltung der Erfindung ist es vorgesehen, daß statt eines zylindrischen Kragens mit vor der Montage radial nach innen gerichteten Ansätzen ein gerade-zylindrischer Kragen vorhanden ist, dessen freies biegbares Ende dann nach der Montage radial nach außen gebogen ist.

Im übrigen ist in weiterer Abweichung zu den vorher beschriebenen Ausführungsbeispielen vorgesehen, daß die Haltescheibe keinen umlaufenden Bördelrand bildet, sondern daß der Bördelrand durch gleichmäßig am Umfang verteilt angeordnete Biegelaschen ersetzt ist, die im montierten Zustand radial einwärts gerichtet sind und einen ringsumlaufenden Aufnahmeraum für die Aufnahme der Federscheibe bilden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schematisiert eine Montagescheibe mit Federwirkung vor ihrer Befestigung mit dem Trägerblech.
- Figur 2:: Die Anordnung nach Figur 1 nach der Befestigung mit dem Trägerblech.
- Figur 3:: Die Anordnung nach Figur 2 mit einem daran befestigten Befestigungsteil.
- Figur 4:: Die Montagescheibe in Draufsicht entsprechend der Pfeilrichtung IV und in Figur 5.
- Figur 5:: Die Montagescheibe im Schnitt.
- Figur 6:: Die Haltescheibe in Draufsicht.
- Figur 7:: Die Haltescheibe im Schnitt.
- Figur 8:: Die Federscheibe im Schnitt.
- Figur 9:: Die Federscheibe in perspektivischer Seitenansicht.
- Figur 10:: Die Federscheibe in Draufsicht.
- Figur 11:: Die Federscheibe in einer anderen perspektivischen Ansicht.
- Figur 12:: Eine andere Ausführungsform der Befestigung einer Montagescheibe an einem Trägerblech vor der Befestigung mit Werkzeug.
- Figur 13:: Die Ausführung nach Figur 12 nach der Befestigung
- Figur 14:: Eine zweite Ausführungsform der Erfindung mit einer geänderten Montagescheibe im zusammengebauten Zustand vor Montage des WASB,
- Figur 15:: Die gleiche Darstellung wie Figur 14 nach der Montage des WASB
- Figur 16:: Seitenansicht der Haltescheibe
- Figur 17:: Draufsicht auf die Haltescheibe
- Figur 18:: Schnitt durch die Montagescheibe
- Figur 19:: Schnitt durch die Haltescheibe mit montierter Federscheibe
- Figur 20:: Draufsicht auf die Anordnung nach Figur 19
- Figur 21:: Schnitt durch eine am WASB montierten Montagescheibe
- Figur 22:: Eine gegenüber Figur 21 abgewandelte Ausführungsform, bei der eine Haltescheibe mit einer Federscheibe unmittelbar an einem Trägerblech montiert ist
- Figur 23:: Eine Montageeinrichtung zur Befestigung der gesamten Anordnung an einem Trägerblech
- Figur 24:: Eine gegenüber Figur 22 abgewandelte Ausführung einer Montagescheibe

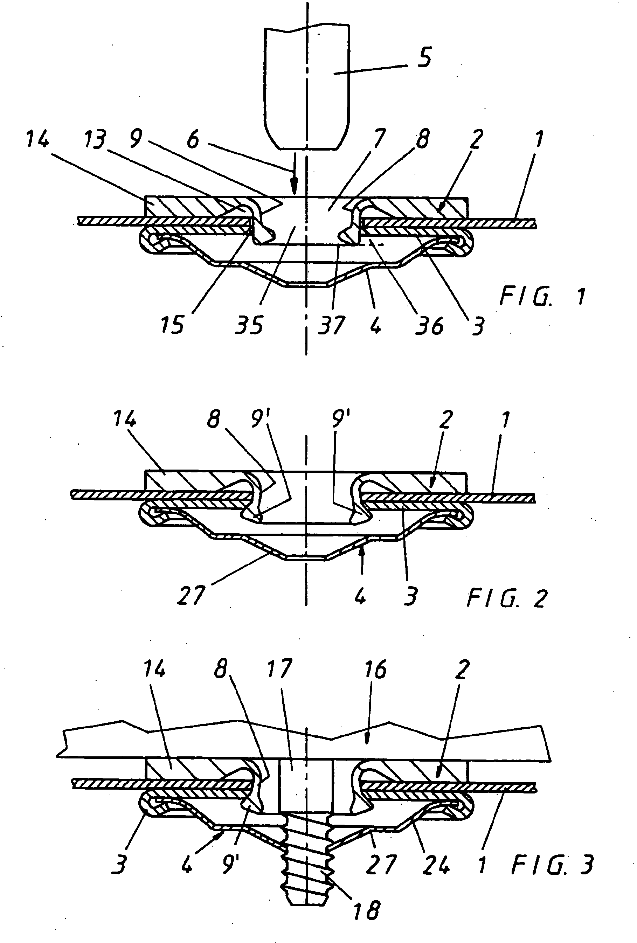

In Figur 1 ist allgemein eine Montageanordnung bestehend aus drei Teilen dargestellt, nämlich aus einer Montagescheibe 2, einer gegenüberliegend einem Trägerblech 1 liegenden Haltescheibe 3, die ihrerseits eine Federscheibe 4 aufnimmt.

Zur Herstellung der Befestigung wird die Montagescheibe 2 auf das Trägerblech 1 von der einen Seite her aufgelegt, so daß sich der radial nach unten ragende Kragen durch die Ausnehmung 35 im Trägerblech hindurchgreift und eine derartige axiale Länge hat, daß dieser axiale Kragen 8 auch noch um ein gewisses Maß über die an der Rückseite des Trägerbleches 1 angelegte Haltescheibe 3 aufweist.

Das Überstandsmaß 36 des Kragens 8 der Montagescheibe 2 muß also so ausgebildet sein, daß die Unterkante 37 des Kragens 8 um eben dieses Überstandsmaß 36 über die Oberfläche der Haltescheibe 3 hervorsteht.

Es wird nun mit einem Nietdorn 5 in Pfeilrichtung 6 in die Ausnehmung 7 der Montagescheibe 2 gefahren, wobei die Ausnehmung 7 im wesentlichen mit der Ausnehmung 35 im Trägerblech 1 fluchtet und im übrigen auch mit der Ausnehmung 22 der darunterliegenden Haltescheibe 3.

Es ist im übrigen nicht lösungsnotwendig, daß die Ausnehmungen kreisförmig sind; sie können auch oval, eckig oder beliebig geformt sein. Die Ausnehmungen sollten nur im Bereich ihrer Befestigung im wesentlichen miteinander fluchten.

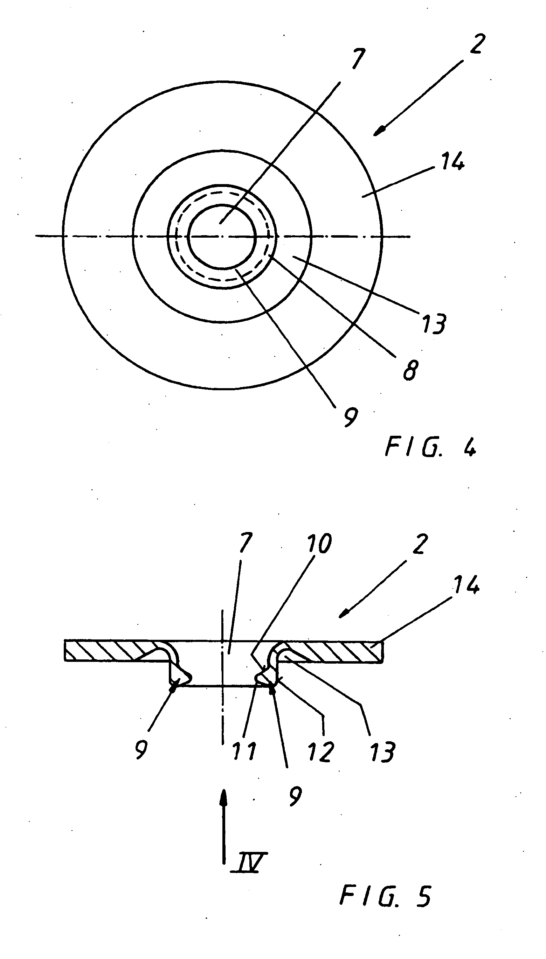

Wichtig ist bei dem Ausführungsbeispiel nach den Figuren 1-3, daß an der Unterseite des Kragens 8 Ansätze 9 angeformt sind, wobei die Ansätze ringsumlaufend, durchgehend ausgebildet sind. Jeder Ansatz 9 weist hierbei eine schräg nach Innen gerichtete Schräge 10 auf, wobei insgesamt der Ansatz 9 gegenüber der Dicke des Kragens 8 verstärkt ausgebildet ist und die Ansätze - im unverformten Zustand gemäß Figur 5 - in die Ausnehmung 7 hineinragen.

An der der Schräge 10 gegenüberliegenden Fläche ist eine entgegengesetzt gerichtete Schräge 11 angeformt und die Rückseite des Ansatzes 9 bildet eine später zu beschreibende Anlagefläche 12.

Der Nietdorn 5 hat einen Außendurchmesser der etwa der Lichtenweite des Kragens 8 entspricht, wobei hierbei die nach innen ragenden Ansätze 9 nicht berücksichtigt sind. Dieser Nietdorn greift daher an den Vorderkanten der Ansätze 9 an und biegt diese gemäß Figur 2 radial auswärts, um die Kante der Ausnehmung im Trägerblech 1 und ebenso um die Kante der Ausnehmung 22 in der Haltescheibe 3.

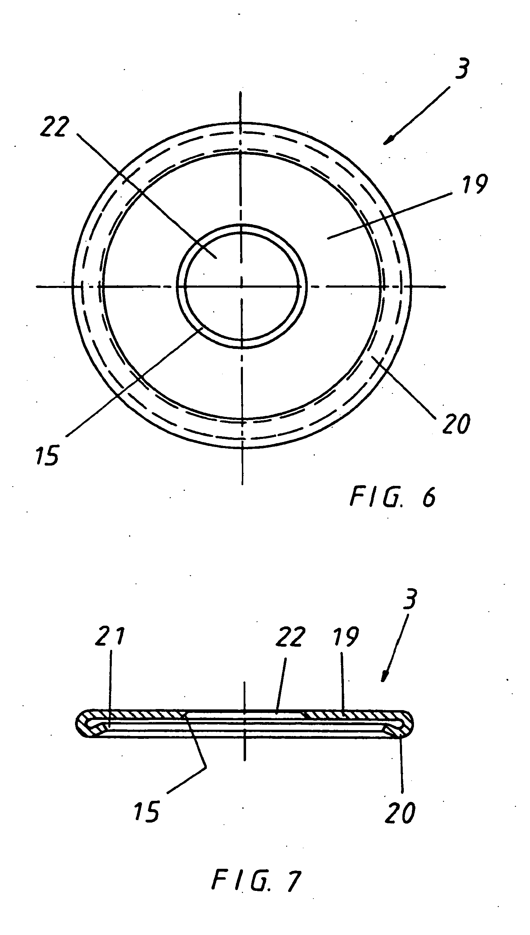

Hierbei wird es bevorzugt, wenn gemäß Figur 7 diese Kante eine Anfasung 15 aufweist, um das radial auswärtsgerichtete Biegen der Ansätze 9 zu erleichtern und eine gute Anlage der Anlagefläche 12 zu gewährleisten.

Die Ringausnehmung 13 ist als materialschwächender Querschnitt in der Montagescheibe 2 eingearbeitet, um die Stärke des Kragens 8 zu verringern, um diesen biegbar zu gestalten.

Die gesamte Montagescheibe 2 wird in einem Stanz- und Prägewerkzeug hergestellt, so daß die nach innen gerichteten wulstförmigen, umlaufenden Ansätze 9 durch den Prägevorgang ausgebildet werden.

Es wurde bereits schon im allgemeinen Beschreibungsteil darauf hingewiesen, daß die umlaufenden Ansätze 9 auch durch radiale Schlitze unterteilt werden können, daß sich einzelne Ansatzsegmente ergeben.

Im übrigen bleibt der Flansch 14 der Montagescheibe gemäß den Figuren 4 und 5 unverformt.

Nach Herstellung der Befestigung nach Figur 2 kann dann ein beliebiges Befestigungsteil 16 mit der Montagescheibe verbunden werden, wobei als Beispiel an diesem Befestigungsteil 16 ein Befestigungsdorn 17 befestigt ist, der ein Gewinde 18 aufweist. Dieses Gewinde 18 wird nun in die Rastausnehmung 26 der Federscheibe 4 eingeschlagen, so daß sich die Rastnasen 27 an den Gewindegängen des Gewindes 18 anlegen und damit das Befestigungsteil 16 einwandfrei über die Montagescheibe an dem Trägerblech 1 befestigt wird.

Hierbei wurde bereits schon ausgeführt, daß das Befestigungsteil 16 aus einem Eisenblech bestehen kann und hierbei die Montagescheibe 2 aus einem relativ dicken Aluminiummaterial, welches deshalb das darunterliegende Trägerblech 1, welches ebenfalls aus einem Aluminiummaterial besteht, vor Korrosion schützt.

Es wurde bereits schon im allgemeinen Beschreibungsteil darauf hingewiesen, daß die Haltescheibe 3 entfallen kann und dass die Federscheibe 4 die Funktion der Haltescheibe übernehmen kann.

Im gezeigten Ausführungsbeispiel nach den Figuren 6 und 7 besteht die Haltescheibe im wesentlichen aus einem ebenen Scheibenkörper 19, an dem ein Bördelrand 20 angeformt ist, der in unverformten Zustand etwa axial nach unten gerichtet ist. Die Figur 7 zeigt hier bereits schon den verformten Zustand des Bördelrandes 20 mit einem Öffnungsschlitz 21, in den der Außenumfang der Federscheibe 4 eingeschoben und dort formschlüssig gehalten ist.

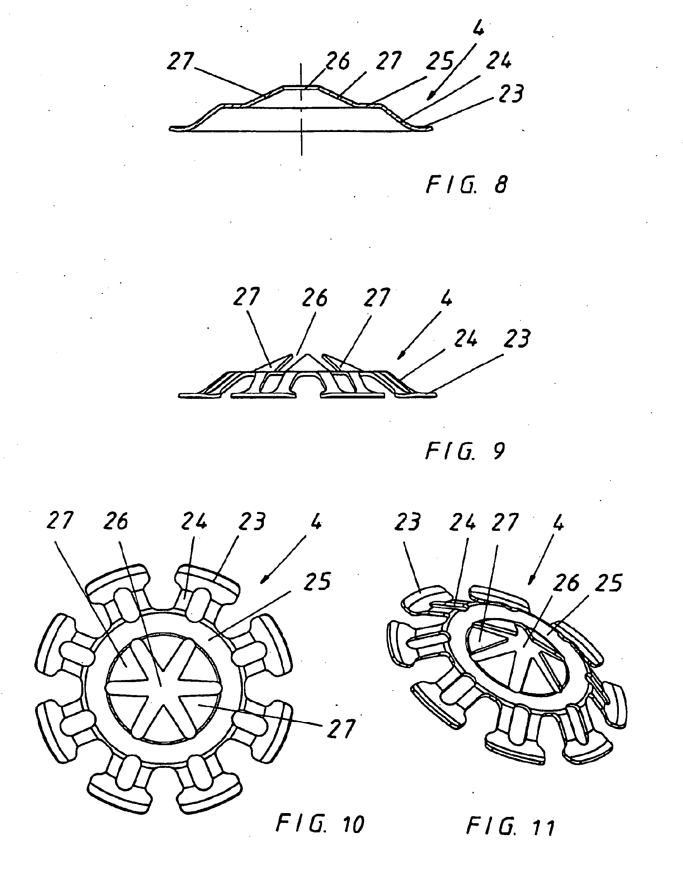

Zur Montage der in den Figuren 8-11 dargestellten Federscheibe 4 in dem Bördelrand 20 der Haltescheibe 3 ist also der Bördelrand 20 zunächst axial nach unten gerichtet, es wird dann die Federscheibe in den Öffnungsschlitz 21 eingelegt und der Bördelrand 20 wird dann entsprechend Figur 7 radial einwärts gerichtet umgeformt, so daß dann die nach außen gerichteten Auflagelappen 23 der Federscheibe 4 in diesem Öffnungsschlitz 21 formschlüssig aufgenommen sind.

Gemäß den Figuren 8-11 besteht die Federscheibe 4 im wesentlichen aus den vorher erwähnten radial auswärts gerichteten Auflagelappen 23, welche über Federschenkel 24 mit einem inneren, umlaufenden Ringteil 25 verbunden sind.

An dem Ringteil 25 sind radial nach innen gerichtete Rastnasen 27 angeformt, die zwischen sich eine etwa sternförmig ausgebildete Rastausnehmung 26 definieren.

Die Rastnasen 27 sind deshalb auch federnd ausgebildet, genauso wie die Federschenkel 24.

Selbstverständlich ist die Ausbildung der Federscheibe 4 nicht auf die dargestellte Formgebung beschränkt. Es können auch anders geformte Rastnasen 27 verwendet werden, die eben keine sternförmige Rastausnehmung 26 definieren, sonder eine ovale oder elliptische Rastausnehmung. Ebenso müssen nicht mehrere gleichmäßig am Umfang verteilt angeordnete Rastnasen 27 vorhanden sein, sonder es kann auch ausreichen, zum Beispiel zwei einander gegenüberliegende Rastnasen zu schaffen, die zwischen sich eine entsprechende Rastausnehmung definieren.

Die Figur 3 zeigt, daß die Befestigung des Gewindes 18 in der Federscheibe 4 stets unter Vorspannung erfolgt, das heißt die Federschenkel 24 und die Rastnasen 27 üben eine Zugwirkung auf den Befestigungsdorn 17 und damit auf das Befestigungsteil 16 aus, welches damit unter entsprechender Federspannung an dem Trägerblech 1 montiert ist.

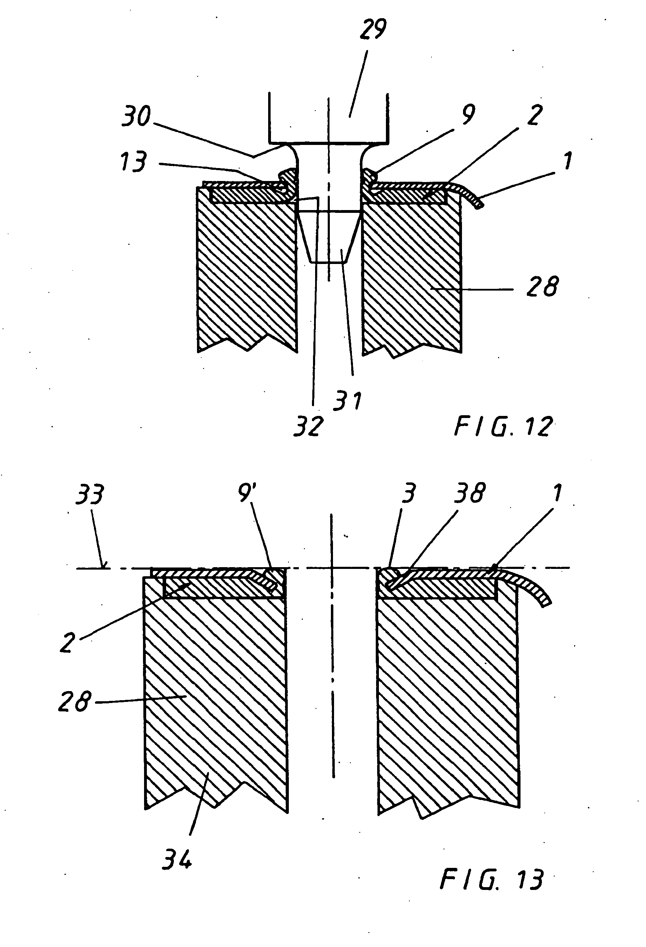

In Figur 12 und 13 ist eine weitere Ausführungsform dargestellt, wo gezeigt ist, daß auf einem Gegenhalter 28 die Montagescheibe 2 aufgelegt ist. Die Montagescheibe 2 entspricht in ihrer Ausführung mit den vorher beschriebenen Ausführungsformen.

Sie greift deshalb wiederum mit ihrem Kragen 8 und dem daran angeformten Ansätzen 9 durch eine entsprechend Ausnehmung in einem Trägerblech 1 hindurch.

Es fehlt allerdings die an der gegenüberliegenden Seite vorgesehene Haltescheibe 3 und die daran befestigte Federscheibe 4.

Mit dem Nietdorn 29 wird die Ausnehmung des Kragens 8 eingefahren und die am Nietdorn angeordnete Nietfläche 30 dient dann zur radial auswärts gerichteten Umformung der Ansätze 9, so daß sich diese gemäß der Figur 13 am Umfang der Ausnehmung im Trägerblech 1 anlegen und das Trägerblech hierbei mit einem Ringansatz 38 einwärts gedrückt wird.

Wichtig hierbei ist, daß die Umformung des Kragens 8 mit den Ansätzen 9 (im verformten Zustand haben diese die Stellung 9') so erfolgt, daß die Rückseite des Trägerbleches, das heißt die Oberfläche 33, bündig bleibt, weil hier der Ringansatz 38 des Trägerbleches in die vorher erwähnte Ringausnehmung 13 der Montagescheibe 2 hinein verdrängt wird.

Danach kann der Gegenhalter 28 in Pfeilrichtung 34 abgezogen werden.

Bevorzugt wird hierbei, wenn die Montagescheibe auch den Ansätzen 9 und auch der vorher erwähnten Ringausnehmung 13 gegenüberliegend einen weiteren Freiraum 32 aufweist, weil hierdurch ein größeres Freivolumen geschaffen werden kann, welches bei der Umformung der Ansätze 9 des Trägerbleches 1 bündig bleibt.

Der in Einführrichtung abgeschrägte Dornkörper 31 dient nur zur Zentrierung des gesamten Nietdornes 29 in der Ausnehmung.

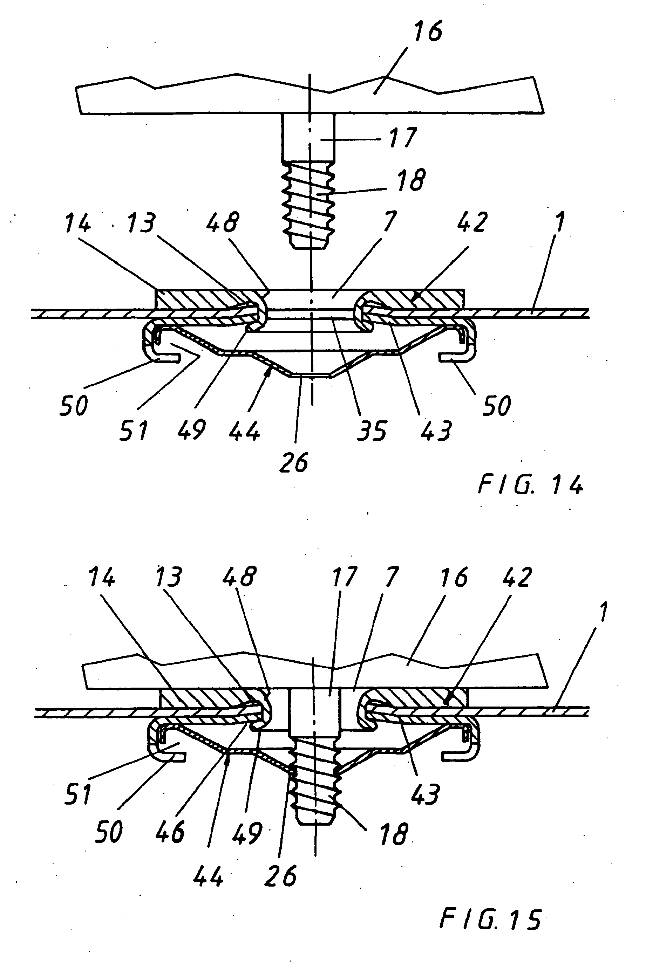

Das in den Figuren 14 bis 23 beschriebene Ausführungsbeispiel unterscheidet sich in mehreren Punkten von dem vorher beschriebenen Ausführungsbeispiel.

Zunächst ist darauf hinzuweisen, daß an der Montagescheibe ein vor der Montage zylindrisch ausgebildeter Kragen 48 angeformt ist, dessen freies biegbares Ende gemäss Figur 14 nach der Montage mit einem nach außen gerichteten, umlaufenden Bördelrand 49 den Innenumfang der zugeordneten Ausnehmung 35 in der Haltescheibe 43 umgreift.

Es entfallen also die keulenförmigen Ansätze 9, 9' im Bereich dieses Kragens nach dem ersten Ausführungsbeispiel. Dies erleichtert die Herstellung der Montagescheibe 42.

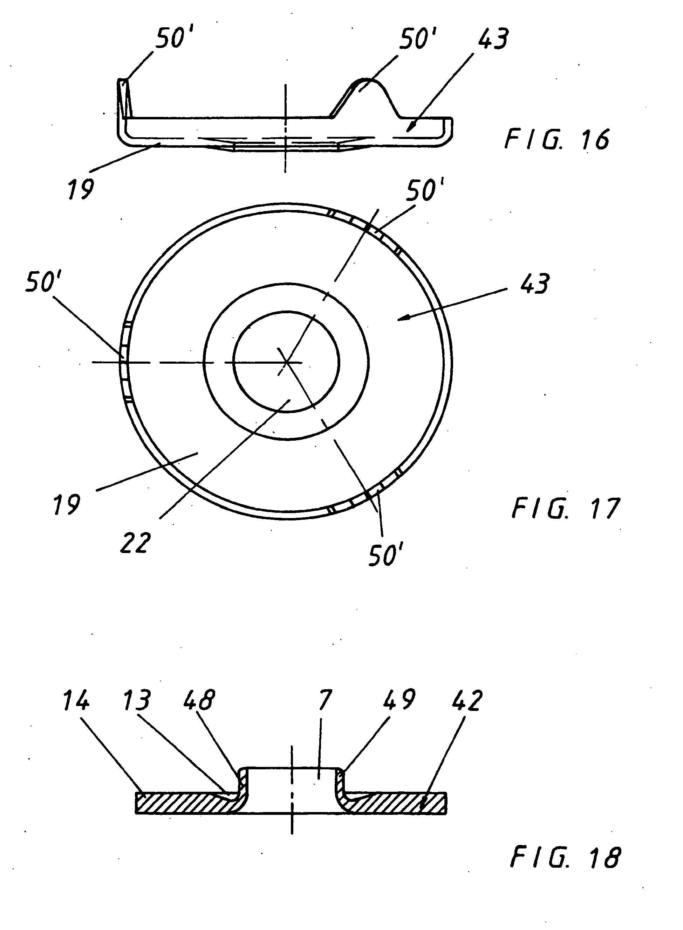

Als weiterer Unterschied zu dem vorher genannten Ausführungsbeispiel ist die Ausführung der Haltescheibe 43 nach den Figuren 16 und 17 zu erläutern.

Anstatt eines umlaufenden Bördelrandes 20, der bspw. in Figur 7 dargestellt war, werden nun einzelne, gleichmäßig am Umfang verteilt angeordnete Biegelaschen 50 vorgeschlagen, welche im nichtgebogenen Zustand als Biegelaschen 50' bezeichnet werden, so wie sie in den Figuren 16 und 17 dargestellt sind.

Die Anordnung einzelner Biegelaschen 50 hat den Vorteil, daß man bei Bedarf auch die Biegelaschen 50 nach erfolgter Montage wieder hochbiegen kann, um dann die Federscheibe 44 aus dem umlaufenden Ringraum 51 der Haltescheibe 43 entnehmen zu können.

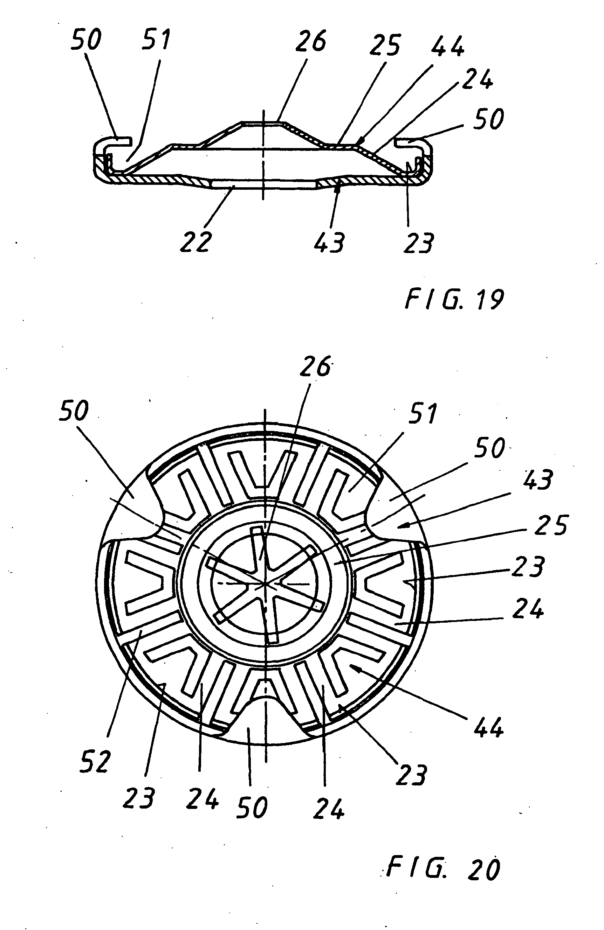

Die Federscheibe 44 gemäss den Figuren 19 und 20 hat als weiteres Merkmal einen axial hochgebogenen, umlaufenden Rand, der ein axiales Bewegungsspiel und gleichzeitig einen axialen Anschlag für die Bewegung der Federscheibe im Ringraum 51 bewerkstelligt.

Von diesem axialen, umlaufenden Rand erstrecken sich die radial einwärts gerichteten Federschenkel 24 in Richtung auf das umlaufende Ringteil 25, mit dem sie werkstoffeinstückig verbunden sind.

Im übrigen wird allgemein darauf hingewiesen, daß in dem zweiten Ausführungsbeispiel nach den Figuren 14 bis 23 für die gleichen Teile auch die gleichen Bezugszeichen des ersten Ausführungsbeispieles verwendet wurden. Es gelten diesbezüglich auch die gleichen Erläuterungen wie für das erste Ausführungsbeispiel.

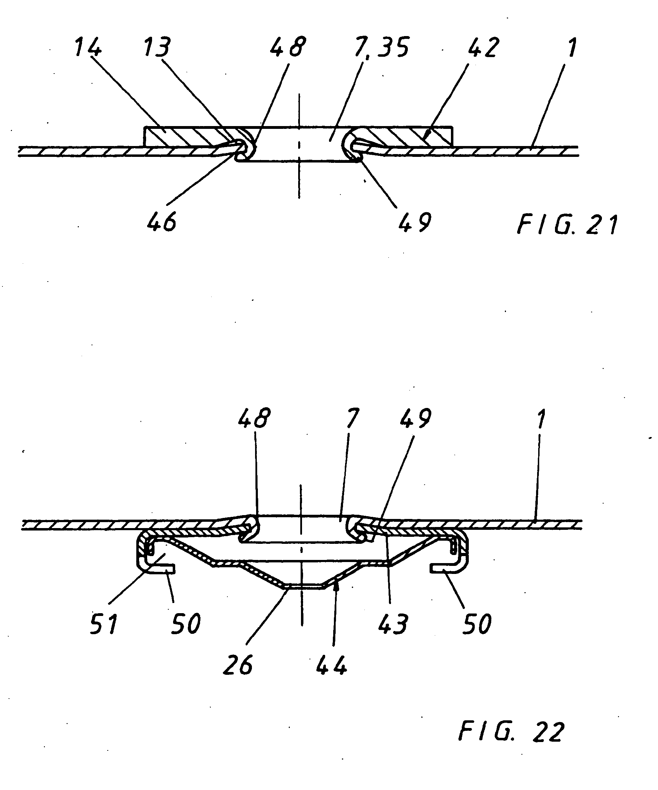

Die Figur 21 zeigt auch die erfindungsgemässe vereinfachte Montage einer Montagescheibe 42 an einem Trägerblech, wobei der gesamte Unterbau gemäss Figur 22 entfallen kann. Mit dem Unterbau ist hierbei die Haltescheibe 43 und die dort eingelegte Federscheibe 44 gemeint.

Es reicht also für die Montage eines Wärmeabschirmbleches an eine Karrosseriefläche die Anordnung nach Figur 21 aus. Hierbei bilden sich dann außenseitig des umlaufenden Bördelkragens 49 Anlageflächen 46, welche den Rand der Ausnehmung 7, 35 im Trägerblech 1 umgreifen.

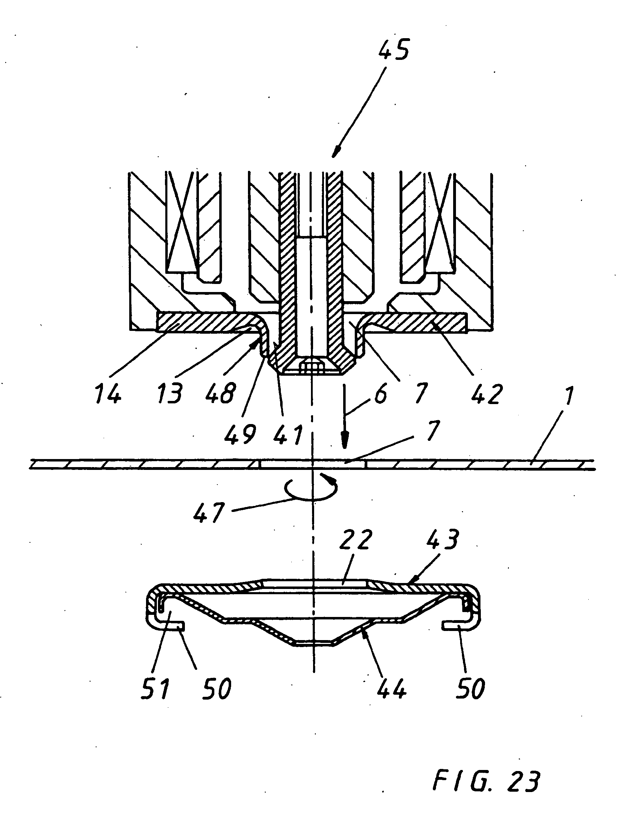

In Figur 23 ist noch die Montage der Anordnung mit einem Taumeldorn 45 dargestellt.

Dieser Taumeldorn ist Bestandteil eines Werkzeuges, welches sich um die Drehachse 47 dreht und hierbei einen radialen Mittenversatz (Taumelbewegung) ausführt.

Der Taumeldorn 45 bildet einen Konusrand 41, welcher aufgrund seiner Taumelbewegungen den Bördelkragen 49 radial nach außen verdrängt und mit den vorher beschriebenen seitlichen Anlageflächen 46 um die zentrale Ausnehmung 7 im Trägerblech 1 anlegt.

Gleichzeitig umfaßt der Bördelkragen 49 auch den umlaufenden Rand der Ausnehmung 22 in der Haltescheibe 43, so daß sich der Gesamtaufbau nach Figur 14 ergibt.

Zur Montage eines Befestigungsteils 16 mit einem daran angeordneten Befestigungsdorn 17 wird dieser nun gemäss Figur 14 und 15 von oben her in die Ausnehmung 26 der Federscheibe 44 eingetrieben, wodurch sich die federnden Lappen am Umfang der Ausnehmung 26 an dem Gewinde 18 des Befestigungsdorns 17 anlegen und der Befestigungsdorn 17 damit in axialer Richtung aufgrund der Federkraft der Federscheibe 44 vorgespannt wird.

Damit wird das gesamte Befestigungsteil 16 unter Federvorspannung gegen das Trägerblech 1 gepreßt und gehalten.

Selbst wenn durch Korrosion die Dicke der Montagescheibe 42 abnimmt, wird dies durch die entsprechende, anliegende Federvorspannung ausgeglichen, so daß immer relativ eine gleiche Federvorspannung - unabhängig von der Dicke der Montagescheibe 42 vorliegt.

Über die gesamte Lebensdauer des Fahrzeuges wird also ein gleichmäßiger Sitz des Befestigungsteils 16 am Trägerblech 1 gewährleistet.

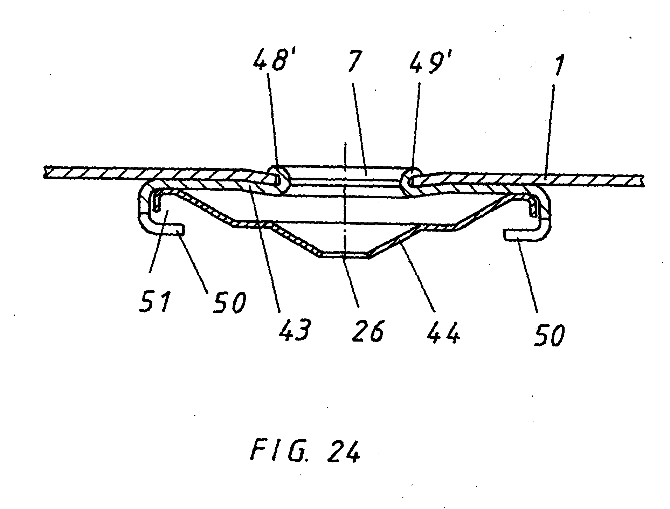

Die Figuren 22 und 24 zeigen zwei verschiedene Abwandlungen des Erfindungsgedankens.

Während Figur 22 darstellt, dass der Kragen 48, der in den Bördelkragen 49 übergeht, am Trägerblech angeordnet ist, zeigt die Figur 24 eine andere Ausführungsform. Dort ist dargestellt, dass die genannten Teile 48', 49' an der Haltescheibe 43 angeordnet sind.

Der Vorteil der Ausführung nach Figur 24 ist, dass im wärmeabschirmenden Blech (Trägerblech 1) lediglich eine Ausnehmung 7 vorgesehen werden muss, die ansonsten unverformt bleibt, während in der Figur 22 diese Ausnehmung noch über die Bördelansätze 48, 49 verformt wird.

### Zeichnungslegende

- 1: Trägerblech
- 2: Montagescheibe
- 3: Haltescheibe
- 4: Federscheibe
- 5: Nietdorn
- 6: Pfeilrichtung
- 7: Ausnehmung
- 8: Kragen
- 9: 9 Ansatz 9'
- 10: Schräge
- 11: Schräge
- 12: Anlagefläche
- 13: Ringausnehmung
- 14: Flansch (Montagescheibe)
- 15: Anpassung
- 16: Befestigungsteil
- 17: Befestigungsdorn
- 18: Gewinde
- 19: Scheibenkörper
- 20: Bördelrand
- 21: Öffnungsschlitz
- 22: Ausnehmung
- 23: Auflagelappen
- 24: Federschenkel
- 25: Ringteil
- 26: Rastausnehmung

- 27: Rastnase
- 28: Gegenhalter
- 29: Nietdorn
- 30: Nietfläche
- 31: Dornkörper
- 32: Freiraum
- 33: Oberfläche
- 34: Pfeilrichtung
- 35: Ausnehmung
- 36: Überstandsmaß
- 37: Unterkante
- 38: Ringansatz
- 39: Flansch
- 40:
- 41: Konusrand
- 42: Montagescheibe
- 43: Haltescheibe
- 44: Federscheibe
- 45: Taumeldorn
- 46: Anlagefläche
- 47: Drehachse
- 48: Kragen 48'
- 49: Bördelkragen 49'
- 50: Biegeachse 50'
- 51: Ringraum
- 52: radialer Schlitz

## Patentansprüche

1. Montageanordnung zum Befestigen eines Trägerblechs (1) an einem Befestigungsdorn (17) eines Befestigungsteils (16), wobei die Montageanordnung eine Montagescheibe (2, 42), eine Haltescheibe (3, 43) und eine Federscheibe (4, 44) beinhaltet, wobei die Montagescheibe (2, 42) einen ringförmigen Flansch (14) als Auflagefläche am Trägerblech (1) besitzt, welcher Flansch (14) zur Aufnahme des Befestigungsdornes (17) eine im wesentlichen zentrale Ausnehmung (7) besitzt, an deren Rand ein axial vorstehender Kragen (8, 48) angebracht ist, der in eine Ausnehmung (35) im Trägerblech (1) einbringbar ist, wobei die Haltescheibe (3, 43) mindestens eine zur Ausnehmung (7) der Montagescheibe (2, 42) fluchtende zentrale Ausnehmung (22) besitzt, und wobei an der Federscheibe (4, 44) mindestens eine weitere Ausnehmung (26) zur Aufnahme des Befestigungsdornes (17) unter Federvorspannung vorhanden ist, **dadurch gekennzeichnet, dass** der Kragen (8, 48) mit mindestens einem ringförmigen, nach der Montage etwa radial nach außen gerichteten Ansatz (9, 49) versehen ist, der im wesentlichen radial nach außen und auf die dem Flansch (14) der Montagescheibe (2, 42) gegenüber liegende Seite des Trägerblechs (1) plastisch verformend umbördelbar ist und **dadurch** die Montagescheibe (2, 42) am Trägerblech (1) festlegbar ist, wobei der Kragen (8, 48) der Montagescheibe (2, 42) mit dem Ansatz (9, 49) durch die Ausnehmung (22) der Haltescheibe (3, 43) hindurchgreift, und wobei die Federscheibe (4, 44) zwischen einem Bördelrand (20, 50) der Haltescheibe (3, 43) gehalten ist,

2. Montageanordnung nach Anspruch 1, **dadurch gekennzeichnet, dass** der Ansatz (9) des Kragens (8, 48) der Montagescheibe (2, 42) in mehrere, ringsegmentförmige Ansätze (9) unterteilt ist.

3. Montageanordnung nach Anspruch 1 oder 2, **dadurch gekennzeichnet, dass** in der Montagescheibe (2) eine Ringausnehmung (13) vorhanden ist, welche Ringausnehmung (13) ringförmig am Übergang des Kragens (8) zum am Trägerblech (1) sich abstützenden Flansch (14) der Montagescheibe (2) vorgesehen ist.

4. Montageanordnung nach einem der Ansprüche 1 bis 3, **dadurch gekennzeichnet, dass** der Bördelrand (20) der Haltescheibe (3) umlaufend ausgebildet ist.

5. Montageanordnung nach einem der Ansprüche 1 bis 3, **dadurch gekennzeichnet, dass** der Bördelrand (20) der Haltescheibe (3) als am Umfang verteilt angeordnete Biegelaschen (50) ausgebildet ist.

6. Montageanordnung nach einem der Ansprüche 1 bis 5, **dadurch gekennzeichnet, dass** der vor der Montage der Montagescheibe (2) axial ausgerichtete Kragen (8) am Umfang der Ausnehmung (7) der Montagescheibe (2) an seinem freien biegbaren Ende radial nach innen gerichtete Ansätze (9) aufweist.

7. Montageanordnung nach einem der Ansprüche 1 bis 5, **dadurch gekennzeichnet, dass** der vor der Montage der Montagescheibe (42) axial ausgerichtete Kragen (48) zylindrisch ausgebildet ist.

8. Montageanordnung nach einem der Ansprüche 1 bis 7, **dadurch gekennzeichnet, dass** die Montagescheibe (2, 42) aus einem Aluminiummaterial gebildet ist.

9. Montageanordnung nach den Ansprüchen 2 und 3, **dadurch gekennzeichnet, dass** der Kragen (8) mit den Ansätzen (9) so umformbar ist, dass die der Möntagescheibe (2) abgewandte Oberfläche (33) des Trägerblechs (1) bündig bleibt, indem ein Ringansatz (38) der Ausnehmung (35) des Trägerbleches (1) in die Ringausnehmung (13) der Montagescheibe (2) hinein verdrängt ist.

10. Montageanordnung nach einem der Ansprüche 4 bis 9,
**dadurch gekennzeichnet, dass** die Montagescheibe (2) den Ansätzen (9) und der Ringausnehmung (13) gegenüberliegend einen weiteren Freiraum (32) aufweist.

11. Montageanordnung nach einem der Ansprüche 1 bis 10, **dadurch gekennzeichnet, dass** die Federscheibe (44) einen axial hochgebogenen, umlaufenden Rand mit Haltelappen (23) aufweist, der ein axiales Bewegungsspiel zulässt und gleichzeitig einen axialen Anschlag für die Bewegung der Federscheibe (44) innerhalb eines durch den Bördelrand (50) der Haltescheibe (43) definierten Ringraumes (51) darstellt.

12. Montageanordnung nach Anspruch 11, **dadurch gekennzeichnet, dass** sich von diesem axialen, umlaufenden Rand mit Haltelappen (23) radial einwärts gerichtete Federschenkel (24) erstrecken in Richtung auf ein umlaufendes Ringteil (25), mit dem sie werkstoffeinstückig verbunden sind.

13. Montageanordnung nach einem der Ansprüche 1 bis 12, **dadurch gekennzeichnet, dass** die Federscheibe (4) an ihrer Ausnehmung (26) Rastnasen (27) aufweist, die sich an Gewindegängen eines am Befestigungdorn (17) ausgebildeten Gewindes (18) anlegen.

14. Montageanordnung zum Befestigen eines Trägerblechs (1) an einem Befestigungsdorn (17) eines Befestigungsteils (16), wobei die Montageanordnung eine eine Ausnehmung (22) aufweisende Haltescheibe (43), eine Federscheibe (44) und das Trägerblech (1) beinhaltet, wobei das Trägerblech (1) eine Auflagefläche an der Haltescheibe (43) besitzt, welche Auflagefläche zur Aufnahme des Befestigungsdornes (17) eine Ausnehmung (35) besitzt, und wobei die Federscheibe (44) zwischen einem Bördelrand (50) der Haltescheibe (43) gehalten ist und mindestens eine Ausnehmung (26) zur Aufnahme des Befestigungsdornes (17) unter Federvorspannung aufweist, **dadurch gekennzeichnet, dass** an dem Rand der Ausnehmung (35) des Trägerblechs (1) ein axial vorstehender Kragen (48) angebracht ist, der in die Ausnehmung (22) in der Haltescheibe (43) eingebracht ist und mindestens einen ringförmigen, nach der Montage an der Haltescheibe etwa radial nach außen gerichteten Ansatz (49) aufweist, der im wesentlichen radial nach außen und auf die der Auflagefläche des Trägerblechs (1) gegenüber liegende Seite der Haltescheibe (43) plastisch verformend umgebördelt ist und **dadurch** die Haltescheibe (43) am Trägerblech (1) festlegt.

15. Montageanordnung zum Befestigen eines eine Ausnehmung (7) aufweisenden Trägerblechs (1) an einem Befestigungsdorn (17) eines Befestigungsteils (16), wobei die Montageanordnung eine Haltescheibe (43), eine Federscheibe (44) und das Trägerblech (1) beinhaltet, wobei die Haltescheibe (43) einen ringförmigen Flansch als Auflagefläche am Trägerblech (1) besitzt, welcher Flansch zur Aufnahme des Befestigungsdornes (17) eine im wesentlichen zentrale Ausnehmung (22) besitzt, an deren Rand ein axial vorstehender Kragen (48) angebracht ist, und wobei die Federscheibe (44) zwischen einem Bördelrand (50) der Haltescheibe (43) gehalten ist und mindestens eine Ausnehmung (26) zur Aufnahme des Befestigungsdornes (17) unter Federvorspannung aufweist, **dadurch gekennzeichnet, dass** der Kragen (48) der Haltescheibe (43) in die Ausnehmung (7) des Trägerblechs (1) eingebracht ist und mindestens einen ringförmigen, nach der Montage am Trägerblech (1) etwa radial nach außen gerichteten Ansatz (49) aufweist, der im wesentlichen radial nach außen und auf die dem Flansch der Haltescheibe (43) gegenüber liegende Seite des Trägerblechs (1) plastisch verformend umgebördelt ist und **dadurch** die Haltescheibe (43) am Trägerblech (1) festlegt.

## Claims

1. Assembly arrangement for fastening a support sheet (1) to a fastening stud (17) of a mounting part (16), the assembly arrangement comprising a mounting washer (2, 42), a support plate (3, 43) and a spring washer (4, 44), wherein the mounting washer (2, 42) has an annular flange (14) as a supporting surface on the support sheet (1), said flange (14) having a substantially central recess (7) for receiving the fastening stud (17), at the edge of which recess an axially protruding collar (8, 48) is arranged which can be inserted into a recess (35) in the support sheet (1), wherein the support plate (3, 43) comprises at least one recess (22) which is aligned with the recess (7) of the mounting washer (2, 42), and wherein at least one further recess (26) for receiving the fastening stud (17) under spring tension is present in the spring washer (4, 44), **characterized in that** the collar (8, 48) is provided with at least one annular projection (9, 49) directed radially outward after assembly, which can be beaded substantially radially outward and onto the side of the support sheet (1) opposed to the flange (14) of the mounting washer (2, 42) under plastic deformation and thus fixing the mounting washer (2, 42) to the support plate (1), wherein the collar (8, 48) of the mounting washer (2, 42) reaches through the recess (22) of the support plate (3, 43) with the projection (9, 49), and wherein the spring washer (4, 44) is held between a beaded edge (20, 50) of the support plate (3, 43).

2. Assembly arrangement according to claim 1, **characterized in that** the projection (9) of the collar (8, 48) of the mounting washer (2, 42) is divided into a plurality of projections (9) in the form of ring segments.

3. Assembly arrangement according to claim 1 or 2, **characterized in that** an annular recess (13) is present in the mounting washer (2), which annular recess (13) is provided in ring-shape at the transition of the collar (8) into the flange (14) of the mounting washer (2) supported by the support sheet (1).

4. Assembly arrangement according to one of claims 1 to 3, **characterized in that** the beaded edge (20) of the support plate (3) is formed circumferentially.

5. Assembly arrangement according to one of claims 1 to 3, **characterized in that** the beaded edge (20) of the support plate (3) is in the form of bending lugs (50) arranged in a distributed manner around the circumference.

6. Assembly arrangement according to one of claims 1 to 5, **characterized in that** the collar (8) on the circumference of the recess (7) of the mounting washer (2) which is axially oriented before the assembly of the mounting washer (2) has projections (9) on its free bendable end which point radially inward.

7. Assembly arrangement according to one of claims 1 to 5, **characterized in that** the collar (48) which is axially oriented before the assembly of the mounting washer (42) is formed cylindrically.

8. Assembly arrangement according to one of claims 1 to 7, **characterized in that** the mounting washer (2, 42) is made from aluminum material.

9. Assembly arrangement according to claims 2 and 3, **characterized in that** the collar (8) with its projections (9) can be formed in such a way that the surface (33) of the support sheet (1) facing away from the mounting washer (2) remains flush by displacing an annular projection (38) of the recess (35) of the support sheet (1) into the annular recess (13) of the mounting washer (2).

10. assembly arrangement according to one of claims 4 to 9, **characterized in that** the mounting washer (2) comprises an additional free space (32) opposite to the projections (9) and the annular recess (13).

11. Assembly arrangement according to one of claims 1 to 10, **characterized in that** the spring washer (44) comprises a circumferential edge bent axially upward and having holding tabs (23), which permits an axial play and at the same time presents an axial stop for the movement of the spring washer (44) within a ring-shaped space (51) defined by the beaded edge (50) of the support washer (43).

12. Assembly arrangement according to claim 11, **characterized in that** from said axially circumferential edge comprising holding tabs (23) elastic legs (24) extend in a radially inward orientation towards a circumferential ring part (25) to which they are joined integrally in the same material.

13. assembly arrangement according to one of claims 1 to 12, **characterized in that** the spring washer (4) comprises locking prongs (27) at its recess (26) which engage the turns of a thread (18) formed on the fastening stud (17).

14. Assembly arrangement for fastening a support sheet (1) to a fastening stud (17) of a mounting part (16), the assembly arrangement including a support plate (43) having a recess (22), a spring washer (44) and the support sheet (1), the support sheet (1) having a support surface on the support plate (43), which support surface has a recess (35) for receiving the fastening stud (17), and wherein the spring washer (44) is held between a beaded edge (50) of the support plate (43) and comprises at least one recess (26) for receiving the fastening stud (17) under spring tension, **characterized in that** an axially projecting collar (48) is arranged at the edge of the recess (35) of the support sheet (1) which is inserted into the recess (22) in the support plate (43) and which has at least one annular projection (49) which is directed substantially radially outward after mounting to the support plate, and which is beaded substantially radially outward and onto the side of the support plate (43) opposite to the supporting surface of the support sheet (1) under plastic deformation and thus fixes the support plate (43) to the support sheet (1).

15. Assembly arrangement for fastening a support sheet (1) having a recess (7) to a fastening stud (17) of a mounting part (16), the assembly arrangement including a support plate (43), a spring washer (44) and the support sheet (1), wherein the support plate (43) has an annular flange (14) as a supporting surface on the support sheet (1), said flange (14) having a substantially central recess (22) for receiving the fastening stud (17), at the edge of said recess an axially protruding collar (48) being arranged, and wherein the spring washer (44) is held between a beaded edge (50) of the support plate (43) and comprises at least one recess (26) for receiving the fastening stud (17) under spring tension, **characterized in that** the collar (48) of the support plate (43) is inserted into the recess (7) of the support sheet (1) and has at least one annular projection (49) which is directed substantially radially outward after assembly to the support sheet (1) and which is beaded substantially radially outward and onto the side of the support sheet (1) opposite to the flange of the support plate (43) under plastic deformation and thus fixes the support plate (43) to the support sheet (1).

## Revendications

1. Arrangement de montage pour la fixation d'une tôle de support (1) à un mandrin de fixation (17) d'une pièce de fixation (16), ledit arrangement de montage comprenant une rondelle de montage (2, 42), une rondelle de retenue (3, 43) et une rondelle élastique (4, 44), sachant que la rondelle de montage (2, 42) possède une bride en forme de bague (14), en tant que surface d'appui sur la tôle de support (1), ladite bride (14) étant pourvue, pour la réception du mandrin de fixation (17), d'un évidement (7) sensiblement central, sur le bord duquel est prévu un collet (8, 48), qui, faisant saillie axialement, peut être introduit dans la tôle de support (1), dans un évidement (35), la rondelle de retenue (3, 43) étant pourvue d'au moins un évidement (22) central, qui est en alignement par rapport à l'évidement (7) de la rondelle de montage (2, 42), et sachant que, sur la rondelle élastique (4, 44), est prévu au moins un autre évidement (26) pour accueillir le mandrin de fixation (17), sous pré-tension élastique, **caractérisé en ce que** le collet (8, 48) est pourvu d'au moins un épaulement (9, 49) de forme annulaire, orienté, après le montage, à peu près radialement vers l'extérieur, lequel peut être rabattu par déformation plastique, sensiblement dans la direction radiale, vers l'extérieur, et sur le côté de la tôle de support (1), qui est situé à l'opposé de la bride (14) de la rondelle de montage (2, 42), et que la rondelle de montage (2, 42) peut être ainsi fixée à la tôle de support (1), le collet (8, 48) de la rondelle de montage (2, 42) s'engageant à travers l'évidement (22) de la rondelle de retenue (3, 43), par l'épaulement (9, 49), et la rondelle élastique (4, 44) étant maintenue dans un bord rabattu (20, 50) de la rondelle de retenue (3, 43).

2. Arrangement de montage selon la revendication 1, **caractérisé en ce que** l'épaulement (9) du collet (8, 48) de la rondelle de montage (2, 42) est divisé en plusieurs saillies (9) en forme de segments d'anneau.

3. Arrangement de montage selon revendication 1 ou 2, **caractérisé en ce** e, dans la rondelle de montage (2), il existe un évidement annulaire (13), ledit évidement annulaire (13), configuré en forme d'anneau, étant prévu dans la zone de transition entre le collet (8) et la bride (14) de la rondelle de montage (2), qui prend appui sur la tôle de support (1).

4. Arrangement de montage selon l'une des revendications 1 à 3, **caractérisé en ce que** le bord rabattu (20) de la rondelle de retenue (3) est exécuté tout le long de la périphérie.

5. Arrangement de montage selon l'une des revendications 1 à 3, **caractérisé en ce que** le bord rabattu (20) de la rondelle de retenue (3) est réalisé sous la forme de pattes flexibles (50), réparties sur le pourtour.

6. Arrangement de montage selon l'une des revendications 1 à 5, **caractérisé en ce que** le collet (8), orienté dans la direction axiale avant le montage de la rondelle de montage (2), présente, sur la périphérie de l'évidement (7) de la rondelle de montage (2), à son extrémité libre, flexible, des épaulements (9) dirigés radialement vers l'intérieur.

7. Arrangement de montage selon l'une des revendications 1 à 5, **caractérisé en ce que** le collet (8), orienté dans la direction axiale avant le montage de la rondelle de montage (42), est de forme cylindrique.

8. Arrangement de montage selon l'une des revendications 1 à 7, **caractérisé en ce que** la rondelle de montage (2, 42) est réalisée en matériau à base d'aluminium.

9. Arrangement de montage selon les revendications 2 et 3, **caractérisé en ce que** le collet (8) peut être déformé avec les épaulements (9) de sorte que la surface (33) de la tôle de support (1) opposée à la rondelle de montage (2) demeure affleurée, du fait qu'une saillie annulaire (38) de l'évidement (35) de la tôle de support (1) est refoulée dans l'évidement annulaire (13) de la rondelle de montage (2).

10. arrangement de montage selon l'une des revendications 4 à 9, **caractérisé en ce que** la rondelle de montage (2) présente un autre espace libre (32) situé à l'opposé des épaulements (9) et de l'évidement annulaire (13).

11. Arrangement de montage selon l'une des revendications 1 à 10, **caractérisé en ce** e la rondelle élastique (44) présente un bord périphérique, cambré axialement, avec des oreilles de retenue (23), qui laisse un jeu pour le mouvement axial, et qui représente simultanément une butée axiale pour le déplacement de la rondelle élastique (44) à l'intérieur d'un espace annulaire (51), défini par le bord rabattu (50) de la rondelle de retenue (43).

12. Arrangement de montage selon la revendication 11, **caractérisé en ce que**, partant de ce bord périphérique axial avec oreilles de retenue (23), des branches élastiques (24), orientés radialement vers l'intérieur (24), s'étendent en direction d'une pièce annulaire périphérique (25), à laquelle elles sont reliées d'une pièce par liaison de matériau.

13. Arrangement de montage selon l'une des revendications 1 à 12, **caractérisé en ce que** la rondelle élastique (4) présente, sur son évidement (26), des nez d'arrêt (27) qui viennent porter contre les pas d'un filet (18) formé sur le mandrin de fixation (17).

14. Arrangement de montage pour la fixation d'une tôle de support (1) à un mandrin de fixation (17) d'une pièce de fixation (16), sachant que ledit arrangement de montage comprend une rondelle de retenue (43), qui présente un évidement (22), une rondelle élastique (44), et la tôle de support (1), la tôle de support (1) présentant une surface d'appui sur la rondelle de retenue (43), laquelle surface d'appui présente un évidement (35) pour la réception du mandrin de fixation (17), et la rondelle élastique (44) étant maintenue dans le bord rabattu (50) de la rondelle de retenue (43), et présentant au moins un évidement (26) pour la réception du mandrin de fixation (17) sous pré-tension élastique, **caractérisé en ce que**, sur le bord de l'évidement (35) de la tôle de support (1), est prévu un collet (48), qui est introduit dans la rondelle de retenue (43), dans l'évidement (22), et qui présente au moins un épaulement (49) en forme d'anneau, orienté à peu près radialement, vers l'extérieur, après le montage sur la rondelle de retenue, lequel est rabattu par déformation plastique, sensiblement en direction radiale, vers l'extérieur, et sur le côté de la rondelle de retenue (43), situé à l'opposé de la surface d'appui de la tôle de support (1), et fixe ainsi la rondelle de retenue (43) à la tôle de support (1).

15. Arrangement de montage pour la fixation d'une tôle de support (1), présentant un évidement (7), à un mandrin de fixation (17) d'une pièce de fixation (16), sachant que ledit arrangement de montage comprend une rondelle de retenue (43), une rondelle élastique (44), et la tôle de support (1), la rondelle de retenue (43) étant pourvue d'une bride en forme d'anneau, en tant que surface d'appui sur la tôle de support (1), ladite bride étant pourvue, pour la réception du mandrin de fixation (17), d'un évidement (22) sensiblement central, sur le bord duquel est prévu un collet (48) en saillie axiale, et la rondelle élastique (44) étant maintenue dans un bord rabattu (50) de la rondelle de retenue (43), et présentant au moins un évidement (26) pour la réception du mandrin de fixation (17) sous pré-tension élastique, **caractérisé en ce que** le collet (48) de la rondelle de retenue (43) est introduit dans l'évidement (7) de la tôle de support (1) et présente au moins un épaulement (49) en forme d'anneau, orienté à peu près radialement, vers l'extérieur, après le montage sur la tôle de support (1), lequel est rabattu par déformation plastique, sensiblement dans la direction radiale, vers l'extérieur, et sur le côté de la tôle de support (1), situé à l'opposé de la bride de la rondelle de retenue (43), et fixant ainsi la rondelle de retenue (43) à la tôle de support (1).
